Europäisches Patentamt

European Patent Office

Office européen des brevets

(19)

(11) Publication number: **0 049 150**
**B1**

# EUROPEAN PATENT SPECIFICATION

(12)

(45) Date of publication of patent specification: **18.12.85**

(21) Application number: **81304473.2**

(22) Date of filing: **28.09.81**

(51) Int. Cl.⁴: **G 01 S 13/32**

(54) **Spread spectrum transmitter and receiver.**

(30) Priority: **29.09.80 US 191871**

(43) Date of publication of application:
**07.04.82 Bulletin 82/14**

(45) Publication of the grant of the patent:
**18.12.85 Bulletin 85/51**

(84) Designated Contracting States:
**DE FR GB**

(56) References cited:
**FR-A-2 327 553**
**US-A-3 167 766**
**US-A-3 774 206**
**US-A-3 881 177**
**US-A-4 115 772**
**US-A-4 216 472**

**IEEE TRANSACTIONS ON AEROSPACE AND
ELECTRONIC SYSTEMS, vol. AES-13, no. 6,
November 1977, P.M. HOPKINS "Double dither
loop for pseudonoise code tracking", pages
644-650**

(73) Proprietor: **SPERRY CORPORATION**
**1290, Avenue of the Americas**
**New York, N.Y. 10019 (US)**

(72) Inventor: **Zscheile, John Walter, Jr.**
**1379 North 1580 West**
**Farmington Utah 84025 (US)**

(74) Representative: **Orchard, Oliver John**
**JOHN ORCHARD & CO. Staple Inn Buildings**
**North High Holborn**
**London WC1V 7PZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to continuous wave adaptive signal processing systems and has an important application in spread spectrum carrier wave altimeters.

Radio frequency altimeters are known. The most common type of radio frequency altimeter transmits a burst of energy from a transmitting antenna and receives the reflected energy burst back at a receiving antenna. A ranging system is employed to determine the time required for the signal burst to make the round trip which is converted by known techniques into distance or elevation.

Continuous wave (CW) radio frequency altimeters are known, but heretofore have had limited use because they were generally confined to a range of no more than ten thousand feet (approximately 3 km). The main reason for the limited use of CW altimeters is that, unlike in altimeters using burst of energy where the receiver is made inoperative during transmission, the signal produced at the transmitting antenna of a CW altimeter is continuously coupled by leakage paths into the receiving antenna and the received signal processing path. Theretofore, when the leakage signal became much stronger than the signal returned by reflection from a distant object, the leakage signal masked the returned signal so that the returned signal could not properly be recovered.

A continuous wave radar altimeter is only one type of transmitting and receiving system which suffers from the above-mentioned leakage problem. Any continuous wave radio frequency communications system which requires that the transmitting path be close to the receiving path, will have replicas of the transmitted signal inherently coupled into the receiving path. Jamming systems, which generate jamming signals and also attempt to monitor the signal being jammed in order to measure the effectiveness of jamming, are plagued with the same problem when the receiving monitor system is placed in close proximity to the jamming transmitter.

Radio frequency altimeters, which generate bursts of energy, are, moreover, easy to detect and so are not suitable for use in a covert vehicle such as bombers and cruise missiles.

In US—A—3 774 206 there is described a pseudo-randomly phase modulated radar altimeter in which a CW wave is phase modulated at predetermined intervals determined by a code generator by reversing the phase 180° before transmission. The modulating signal comprises a pseudo-random sequence of pulses, the leading edge of each pulse causing the CW signal to be reversed by 180° while the trailing edge causes the CW signal to be returned to its original phase.

A self test monitoring facility is described in which a digitally simulated delay is provided. A perturbation introduced in a closed loop formed in the receiver when the receiver is tracking travels around the loop and the loop is examined at a second point for the perturbation, the delay between the code generator and the tracking generator providing an indication of the travel time of a reflected wave.

However, the above mentioned U.S. patent is not concerned with the problems that arise from leakage between a transmitting antenna and a receiving antenna and there is no suggestion that the receiver loop should include means arranged to cause leakage signals to be eliminated.

The present invention aims to provide a continuous wave transmitting and receiving system which largely overcomes the problems which are created by leakage signals in prior art systems.

In outline, the present invention as claimed provides a spread spectrum carrier wave apparatus in which the transmitter system and the receiver system are in close proximity, and in which means are provided to eliminate the undesired leakage signal from the transmitter system in the receiver system thereby to enhance the receptibility of the desired signal. The signal path of the transmitter system is employed to process the signals to be transmitted as reference signals. The signal path of the receiving system processes both the desired signal and the leakage signal which is employed in an adaptive processor to cancel the reference signal to leave the desired signals.

In applications such as a radar altimeter where the desired signal is the transmitted signal returned after reflection, the leakage signal is also employed to start a range count which is subsequently stopped by the returned signal.

Generally applicable to radio frequency altimeters as well as other systems such as jamming and communications systems, the present invention is particularly suitable for use in applications requiring a covert continuous wave radar altimeter.

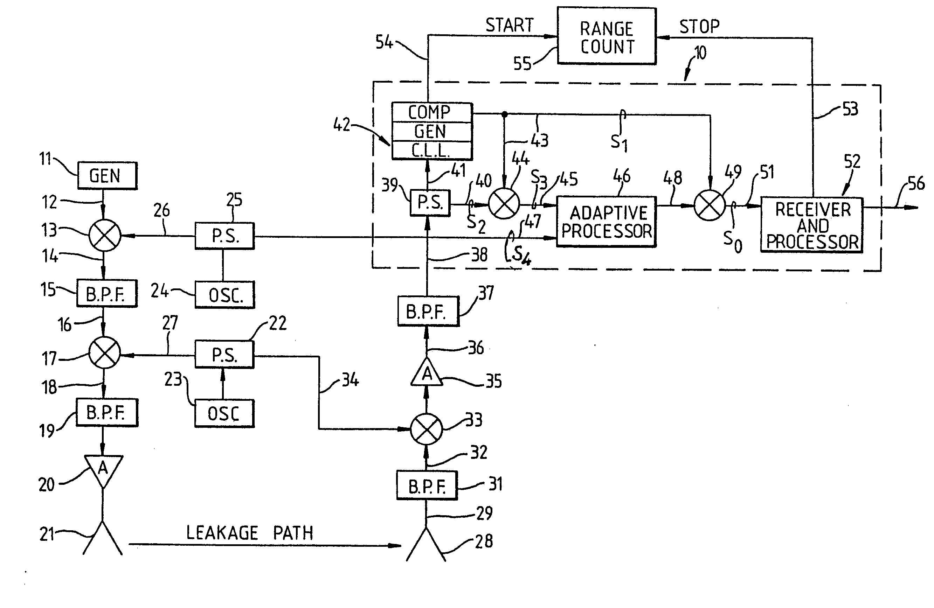

The invention will now be described further by way of a particular embodiment and with reference to the accompanying drawing, the single Figure of which shows a schematic block diagram of a radio frequency continuous wave altimeter.

Referring now also to the Figure, a spread spectrum carrier wave apparatus has a transmitter in close proximity to its receiver. The reference signal in the transmitting path (11 to 21) is adapted to be transmitted in the manner required in radar altimeters, in communication systems or in jam and monitor systems. All three of the aforementioned spread spectrum carrier wave systems can be illustrated by means of the single embodiment shown in the Figure, with the basic signal processing system 10 being employed in each case. As will be explained in greater detail hereinafter, in the case of the illustrated radar altimeter some form of ranging apparatus is also employed.

In all three types of systems, the reference signal being transmitted also appears as a leakage signal in the receiving path because the two paths are close enough to be electromagnetically coupled. When the leakage signal is stronger than the received signal, the leakage signal masks the monitored signal which would make it impossible, in the absence of special measures, to distinguish the desired received signal. In the radar altimeter illustrated, the desired signal is the returned signal, generally accompanied by unwanted noise, which is received by the receiving antenna 28.

A random code generator 11 which may be one of several types of generators, produces selectable repetitive patterns of binary signals with noise-like properties. Both linear and non-linear pseudonoise generators and pseudonoise random code generators are names generally applied to such generators. For the purposes of explaining the described embodiment radar altimeter, the generator 11 shall be a pseudonoise generator.

The generator 11 produces controlled patterns of noise-like signals on line 12, which are applied to one input of a first mixer 13. An oscillator 24 generates an intermediate frequency (I.F.) carrier signal which is applied to a power splitter 25 and via line 26 to the mixer 13. The output of the mixer 13 on line 14 is the pseudonoise signal which has a multiplied or additive carrier frequency applied thereto. Any undesired portions of the signal are removed in a band pass filter 15, or an equivalent processing circuit device which removes unwanted noise and signals. The modulated clean processed signal on line 16 is applied to one input of a second mixer 17. A local oscillator 23, preferably operating in the microwave frequency gigahertz range, has an output signal which is applied via power splitter 22 and via line 27 to the second input of the mixer 17. The output signal from the mixer 17 on line 18 is up converted to the final carrier wave frequency and is applied to a band pass filter 18, or equivalent circuit, to remove the undesired components of the signal. The reference signal output from the band pass filter 19 is amplified and processed at amplifier 20 and transmitted from antenna 21 as the transmitted radar, i.e. radio frequency, signal.

The transmitted signal from antenna 21 is a microwave carrier frequency signal consisting of the frequencies of the oscillator 23 added to the frequency of oscillator 24. In the presently described embodiment of a radar altimeter, the transmitted signal is bounced off the earth or a desired target and is received as a reflected signal at antenna 28. As will be explained hereinafter, electromagnetic radiation is coupled between antenna 21 and 28 which is shown as leakage path. Other forms of coupling between the transmitting path and the receiving path may also occur.

The returned signal which is received at antenna 28 is an attenuated and delayed reflected replica of the signal which was transmitted from antenna 21. In the case of a radar altimeter, there is a very strong leakage path from antenna 21 to antenna 28. Other leakage paths may be more important in other types of systems in which the transmitting path is in close proximity to the receiving path.

The signal received on line 29 contains leakage signals, returned signals, and undesired signals such as noise, etc., which are removed in a band pass filter 31 or an equivalent circuit. The resulting clean signals on line 32 are applied to one input of a mixer 33, which has a second input at line 34 from power splitter 22 and local oscillator 23. The microwave frequency local oscillator 23 provides means for down converting, or demodulating, the returned signal and the leakage signal to an intermediate frequency (I.F.). The down converted signals from mixer 33 are processed in an amplifier 35 and applied via line 36 to a filter 37 to remove any of the undesired components and noise introduced by amplification. The clean processed I.F. signals on line 38 are applied to power splitter 39 which also serves an impedance matching function. The clean processed I.F. signals are applied via line 41 to code lock loop means 42. In the radar altimeter of the described embodiment, the code lock loop means 42 also includes a pseudonoise generator and a comparator. This pseudonoise generator must be identical in operation, and is preferably similar in construction, to the generator 11, and tracks and locks on to the random code signal of the leakage signal. Code lock loop means 42 further comprises the comparator means for detecting a predetermined one of the random code signal patterns produced by generator 11. When the predetermined unique random code signal pattern is present at code lock loop means 42, an epoch or start signal is produced on line 54 which is adapted to start range counter 55.

The signal output on line 43 from code lock loop means 42 is a continuous signal and may be represented by the pseudonoise reference code $S_1=(\pm 1)_t$. The signal output on line 40 is the same input signal as that present on line 41 to the code lock loop 42, and may be represented by

$$S_2=K(\pm 1)_t\cos(\omega_c t)+M(\pm 1)_{t+\tau}\cos[\omega_c(t+\tau)],$$

where the carrier frequency $\omega_c$ is typically in the range of hundreds of megahertz. When the signal $S_1$ on line 43 is combined with the signal $S_2$ on line 40 in a multiplier-mixer 44, the signal $S_3$ on line 45 is produced which is equal to $S_1$ times $S_2$, i.e.,

$$S_3=K(\pm 1)_t(\pm 1)_t\cos(\omega_c t)+M(\pm 1)_t(\pm 1)_{t+\tau}\cos[\omega_c(t+\tau)].$$

The first portion of the $S_3$ signal is the leakage signal and the latter portion of the $S_3$ signal after the constant M contains the returned delayed and attenuated signal. The expression for the signal $S_3$ can be simplified because $(\pm 1)_t(\pm 1)_t$ by definition reduces to unity. The simplified $S_3$ signal on line 45 is applied to the adaptive processor 46. The second input to adaptive processor 46 is the signal $S_4$ on line 47, where $S_4 = L \cos(\omega_c t + \phi)$. The constants K, L and M are analog voltage values, t is the time base, $\omega_c$ is the carrier frequency, $\tau$ is the time difference between the desired and undesired signals and $\phi$ is the phase of the cosine signal.

Adaptive processor systems are known and have been described in text books. Such a system is also described in U.S. Patent 3,881,177. The second signal path or receiving path, at lines 38, 40 and 41, contain both the returned and the leakage signals. The code lock loop 42 tracks the leakage signal, which is basically the same as the signal being produced by generator 11, and produces a replica of the leakage signal on line 43 which permits the leakage signal to be cancelled by the adaptive signal nulling in adaptive processor 46.

The output on line 48 from adaptive processor 46 is equal to

$$M(\pm 1)_t(\pm 1)_{t+\tau} \cos]\omega_c(t+\tau)]$$

after removal of the leakage signal. The signal is applied to one input of a second multiplier-mixer 49 while the other input to the multiplier-mixer from line 43 presents the replica signal or pseudonoise reference code signal $S_1 = (\pm 1)_t$. The output of multiplier-mixer 49 on line 51 is the desired attenuated and delayed returned signal output

$$S_0 = M(\pm 1)_{t+\tau} \cos[\omega_c(t+\tau)].$$

It will be understood that the recovery of the returned output signal $S_0$ on line 51 may be processed in a receiver and processor 52 in several different ways to produce a final output signal on line 56. In the herein described embodiment of a radar altimeter the attenuated and delayed returned signal on line 51 is processed in a code lock loop means similar to code lock loop means 42. The receiver and processor 52 would thus comprise a pseudonoise generator again similar to generator 11 and producing the identical pseudonoise sequence, but in this case, the generator would be adapted to scan and track the incoming signal on line 51 which is delayed relative to the signal on line 12 and line 41 which produce the start epoch signal on line 54. The same unique epoch signal when appearing at the receiver and processor 52 is employed to produce a stop signal on line 53 which is adapted to stop the range counter 55.

It will be understood that code lock loop 42 is tracking the signal produced by generator 11 or the leakage signal being presented on line 41 while the code lock loop in receiver and process 52 is tracking the returned signal which is delayed, having been transmitted via antenna 21 and received at antenna 28 after a delay corresponding to the distance to ground or target. Thus, the generator in receiver and processor 52 will contain a generator similar to generator 11 which tracks the delayed signal being presented on line 51. The intended purpose of employing the leakage signal on line 41 to produce the start epoch signal on line 54 is to provide greater accuracy in measuring a range count which is equal to the time required for the transmitted signal to leave transmitter 21 and be sensed as a reflected received signal at antenna 28. Systems in which the strong leakage signals produced by electromagnetic coupling between the transmitting path and the receiving path may obtain the reference signal or a leakage signal to be applied to code lock loop from other appropriate points of the transmitting path between the pseudonoise generator 11 and the transmitting antenna.

Code lock loop means 42 and the code lock loop in receiver and processor 52 have been described as comprising a pseudonoise generator employed to track the leakage and the returned signal to produce an epoch signal employed to start and stop the range counter 55. Such systems are known and described as ranging systems. An example of an advanced technology ranging system is found in U.S. Patent Application Serial No. 180,737 for a Non Coherent Two-Way Ranging Apparatus filed 25 August 1980 by B. M. Spencer, now US—A—4 357 609.

In brief, U.S.—A—4 357 609 relates to a two-way spread spectrum ranging system employing matched sets of pseudonoise generators one of which is at base, the other at a remote station. The system provides two range measurements which enable the range between the stations and the offset between their reference clocks to be determined by using the reference marker of one station to start a range count and the reference marker of the other station to stop the range count.

The code lock loop may be a tau dither loop or a delayed lock loop. The tau dither loop is preferred.

The foregoing description explained how the present invention is employed in a radar altimeter. It may also be employed in jamming and monitoring systems as well as other spread spectrum carrier wave systems where there is a strong, normally undesired, leakage signal, which when stronger than the monitored signal, tends to mask the monitored signal.

**Claims**

1. A spread spectrum transmitting and receiving apparatus, in which the transmitter signal path (11 to 27) which includes a signal source (11) and means (13—19, 22—27) to modulate a carrier wave (cos $\omega_c$) with signals from the source (11), is close enough to the receiver signal path (28 to 41) for signal leakage to occur between the transmitter and the receiver path and the receiver includes (first) code lock loop means (42) which receive as input signals ($S_2$) the leakage signals and desired signals, and a first multiplier-mixer (44) which receives said input signals and a tracking signal ($S_1$), the signal source being a random code generator (11) producing a controlled pattern of noise-like signals (±1) for transmission, characterised in that the (first) code lock loop means (42) generates a tracking signal ($S_1$) locked in phase on to the leakage signal and representing a reference code, and in that the receiver includes an adaptive processor (46) which is fed with the carrier wave ($S_4$) from the transmitter path and the output ($S_3$) of the first multiplier-mixer (44) and which is arranged to eliminate the leakage signal by adaptive signal nulling, and a second multiplier-mixer (49) which is coupled to the output of the adaptive processor (46) and the tracking signal ($S_1$) and which is arranged to eliminate the tracking signal, thereby to leave substantially only the desired signals ($S_0$).

2. Use of the spread spectrum transmitting and receiving apparatus as set forth in Claim 1 in a continuous wave radio frequency altimeter having means (52, 55) to generate a range count from the time delay between transmitted and returned signals in such a way that the output signals from the second multiplier-mixer (49) and from the code lock loop means (42) are used in generating the range count.

3. Apparatus as claimed in claim 1, e.g. when used according to claim 2 in an altimeter, in which second code lock loop means (52) is coupled to the output of said second multiplier-mixer (49), the first (42) and the second code lock loop means each comprising a random code generator and means for detecting a predetermined random code sequence, and a range counter (55) which is coupled to the output of the first and the second detecting means and which is arranged to be started by the first detecting means and stopped by said second detecting means thereby to provide a range count.

4. Apparatus as claimed in claim 1 or 3, e.g. when used according to claim 2, in which the first code lock loop means (42) comprises a tau dither loop.

5. Apparatus as claimed in claim 1, 3 or 4, e.g. when used according to claim 2, in which the source random code generator (11) is adapted to produce a non-linear pseudo-random code.

6. Apparatus as claimed in claim 1 or any of claims 3 to 5, e.g. when used according to claim 2, in which the transmitter signal path includes first mixer means (13) and a first oscillator (24) coupled to the first mixer means (13) to apply an intermediate frequence (I.F.) carrier modulation signal to the random code generator (11) output signals.

7. Apparatus as claimed in claim 6, wherein the transmitter path includes second mixer means (17), and a second oscillator (23) coupled to the second mixer means (17) for applying a microwave frequency carrier signal to the (I.F.) modulated random code output signal to produce the spread spectrum carrier wave signals to be transmitted.

8. Apparatus as claimed in any of claims 1 and 3 to 7, e.g. when used according to claim 2, in which the receiver path includes a power splitter (39) having an output connected to the first code lock loop means (42).

## Patentansprüche

1. Sende- und Empfangsgerät für ein gespreiztes Spektrum, bei dem die Sendersignalbahn (11 bis 27) mit einer Signalquelle (11) und mit Hilfsmitteln (13—19, 22—27), die eine Trägerwelle (cos $\omega_o$) mit Signalen aus der Quelle (11) modulieren, sich so dicht an der Empfänger-Signalbahn (28 bis 41) befindet, daß ein Signalnebenschluß zwischen den beiden Bahnen auftritt, und bei dem der Empfänger eine (erste) codefeste Schleife (42) enthält, die als Eingangssignale ($S_2$) die Nebenschlußsignale und gewünschte Signale empfängt, sowie ein erstes Vervielfacher-Mischgerät (44) aufweist, das die Eingangssignale und ein Zielverfolgungssignal ($S_1$) empfängt, wobei die Signalquelle ein Zufallscode-Generator (11) ist, der eine eingestellte Verteilung von rauschartigen Signalen (±1) zum Senden erzeugt, dadurch gekennzeichnet, daß die erste codefeste Schleife (42) ein Zielverfolgungssignal ($S_1$), das einen Bezugscode darstellt, in fester Phase zum Nebenschlußsignal erzeugt, und daß der Empfänger über einen sich anpassenden Prozessor (46), der von der Senderbahn mit der Trägerwelle ($S_4$) und vom Ausgang ($S_3$) des ersten Vervielfacher-Mischgerätes (44) gespeist wird und derart angeordnet ist, daß das Nebenschlußsignal durch eine sich anpassende Signalannulierung ausgeschaltet wird, sowie über ein zweites Vervielfacher-Mischgerät (49) verfügt, das mit dem Ausgangssignal des sich anpassenden Prozessors (46) und dem Zielverfolgungssignal beaufschlagt wird und derart angeordnet ist, daß das Zielverfolgungssignal ausgeschaltet wird, wodurch im wesentlichen nur die gewünschten Signale ($S_0$) übrigbleiben.

2. Verwendung des Sende- und Empfangsgerätes für ein gespreiztes Spektrum, wie im Anspruch 1 angegeben, in einem mit zusammenhängenden Hochfrequenzwellen arbeitenden Höhenmesser mit Hilfsmitteln (52, 55) zur Erzeugung einer Entfernungsmeßzahl aus der Zeitverzögerung zwischen dem gesendeten und zurückgekommenen Signal, derart daß die Ausgangssignale aus dem zweiten Vervielfacher-Mischgerät (49) und aus der codefesten Schleife (42) zur Erzeugung der Entfernungsmeßzahl benutzt werden.

3. Gerät, wie im Anspruch 1 beansprucht, wenn es z. B. gemäß dem Anspruch 2 in einem Höhenmesser verwendet wird, bei dem eine zweite codefeste Schleife (52) mit dem Ausgang des zweiten Vervielfacher-Mischgerätes (49), wobei die erste (42) und zweite codefeste Schleife je einen Zufallscode-Generator und Mittel zur Wahrnehmung einer vorgegebenen Zufallscodefolge enthalten, und mit einem Entfernungsmeßzähler (55) verbunden ist, der am Ausgang des ersten und zweiten Mittels zur Wahrnehmung angeschlossen und derart angeordnet ist, daß er von dem ersten Mittel in Gang gesetzt und von dem zweiten Mittel stillgesetzt wird, um dadurch eine Entfernungsmeßzahl festzulegen.

4. Gerät, wie im Anspruch 1 oder 3 beansprucht, wenn es z. B. gemäß dem Anspruch 2 verwendet wird, bei dem die erste codefeste Schleife (42) eine τ-Ditherschleife enthält.

5. Gerät, wie im Anspruch 1, 3 oder 4 beansprucht, wenn es z. B. gemäß dem Anspruch 2 verwendet wird, bei dem der Zufallscode-Generator (11) als Quelle derart angepaßt ist, daß er einen nichtlinearen Pseudozufallscode hervorbringt.

6. Gerät, wie im Anspruch 1 oder einem der Ansprüche 3 bis 5 beansprucht, wenn es z. B. gemäß dem Anspruch 2 verwendet wird, bei dem die Sendersignalbahn ein erstes Mischgerät (13) und einen ersten Oszillator (24) enthält, der mit dem ersten Mischgerät (13) verbunden ist, um ein Tragermodulationssignal bei einer Zwischenfrequenz den Ausgangssignalen des Zufallscode-Generators (11) aufzuprägen.

7. Gerät, wie im Anspruch 6 beansprucht, bei dem die Senderbahn ein zweites Mischgerät (17) und einen zweiten Oszillator (23) aufweist, der mit dem zweiten Mischgerät (17) verbunden ist, um ein Trägersignal bei einer Mikrowellenfrequenz dem modulierten Zufallscode-Ausgangssignal mit der Zwischenfrequenz aufzuprägen, so daß die zu sendenden Trägerwellensignale mit dem gespreizten Spektrum entstehen.

8. Gerät, wie in einem der Ansprüch 1e und 3 bis 7 beansprucht, wenn es z. B. gemäß dem Anspruch 2 verwendet wird, bei dem die Empfängerbahn einen Leistungsteiler (39) enthält, dessen einer Ausgang mit der ersten codefesten Schleife (42) verbunden ist.

## Revendications

1. Appareil émetteur-récepteur à spectre dispersé, dans lequel la voie de propagation des signaux (11 à 27) dans l'émetteur, qui inclut une source de signaux (11) et des moyens (13—19, 22—27) pour moduler une onde porteuse (cos $\omega_c$) par des signaux délivrés par la source (11), est suffisamment proche de la voie de propagation des signaux (28 à 41) dans le récepteur, pour qu'une fuite de signaux se produise entre la voie de propagation des signaux de l'émetteur et la voie de propagation des signaux du récepteur et dans lequel le récepteur inclut un (premier) dispositif (42) formant une boucle de verrouillage de codes, qui reçoit comme signaux d'entrée ($S_2$), les signaux de fuite et des signaux désirés, et un premier multiplicateur-mélangeur (44) qui reçoit lesdits signaux d'entrée et un signal de poursuite ($S_1$), la source de signaux étant un générateur de codes aléatoires (11) engendrant un motif commandé de signaux ($\pm 1$), semblables à des parasites, pour l'émission, caractérisé en ce que le (premier) dispositif (42) formant boucle de verrouillage de codes engendre un signal de poursuite ($S_1$) verrouillé en phase sur le signal de fuite et représentant un code de référence, et en ce que le récepteur comporte un processeur adaptatif (46) qui est alimenté par l'onde porteuse ($S_4$) provenant de la voie de propagation des signaux dans l'émetteur et par le signal de sortie ($S_3$) du premier multiplicateur-mélangeur (44), et qui est conçu de manière à éliminer le signal de fuite au moyen d'une annulation du signal adaptatif, et un second multiplicateur-mélangeur (49) qui reçoit le signal de sortie du processeur adaptatif (46) et le signal de poursuite ($S_1$) et qui est conçu de manière à éliminer le signal de poursuite, ce qui permet de ne laisser subsister essentiellement que les signaux dérisés ($S_0$).

2. Utilisation de l'appareil émetteur-récepteur à spectre dispersé, tel que dércit dans la revendication 1, dans un altimetre haute fréqunce à ondes entretenues, comportant des moyens (52, 55) pour engendrer une valeur de mesure d'éloignement à partir du retard entre les signaux émis et les signaux renvoyés, de telle manière que les signaux de sortie du second multiplicateur-mélangeur (49) et du dispositif (42) formant boucle de verrouillage de codes soient utilisés pour engendrer la valeur de mesure d'éloignement.

3. Appareil selon la revendication 1, par exemple lorsqu'il est utilisé conformément à la revendication 2 dans un altimètre, dans lequel un second dispositif (52) formant une boucle de verrouillage de codes est accouplé à la sortie dudit second multiplicateur-mélangeur (49), les premier (42) et second dispositifs formant boucles de verrouillage de codes comportant chacun un générateur de codes aléatoires et des moyens pour détecter une séquence prédéterminée de codes aléatoires, et un compteur de mesure d'éloignement (55) qui est accouplé à la sortie des premiers et seconds moyens de détection et qui est conçu de manière à être enclenché par les premiers moyens de détection et à être arrête par lesdits seconds moyens de détection, pour délivrer une valeur de mesure d'éloignement.

4. Appareil selon la revendication 1 ou 3, par exemple lorsqu'il est utilisé conformément à la revendication 2, dans lequel le premier dispositif (42) formant boucle de verrouillage de codes comporte une boucle de vibration tau.

5. Appareil selon la revendication 1, 3 ou 4, par exemple lorsqu'il est utilisé conformément à la revendication 2, dans lequel le générateur de codes aléatoires constituant la source (11) est apte à engendrer un code pseudo-aléatoire non'linéaire.

6. Appareil selon la revendication 1, ou l'une quelconque des revendications 3 à 5, par exemple lorsqu'il est utilise conformément à la revendication 2, dans lequel la voie de propagation des signaux dans l'émetteur inclut un premier dispositif mélangeur (13) et un premier oscillateur (24) accouplé au premier dispositif mélangeur (13) de manière à appliquer un signal de modulation de porteuse à fréquence intermédiaire (I.F.) aux signaux de sortie du générateur de codes aléatoires (11).

7. Appareil selon la revendication 6, dans lequel la voie de propagation des signaux dans l'émetteur inclut un second dispositif mélangeur (17) et un second oscillateur (23) accouplé au second dispositif mélangeur (17), en vue de sortie de code aléatoire modulé (I.F.) afin d'engendrer les signaux d'onde porteuse à spectre dispersé, qui doivent être émis.

8. Appareil selon l'une quelconque des revendications 1 et 3 à 7, par exemple lorsqu'il est utilisé conformément à la revendication 2, dans lequel la voie de propagation des signaux dans le récepteur renferme un diviseur de puissance (39) comportant une sortie raccordée au premier dispositif (42) formant boucle de verrouillage de codes.

0 049 150